# EUROPEAN PATENT APPLICATION

(11) **EP 4 607 393 A2**
(43) Date of publication of application: **27.08.2025**
(21) Application number: 25182037.9
(22) Date of filing: 11.06.2025
(51) Int. Cl.: G06F 21/74

(54) **SECURITY RESOURCE ACCESS METHOD AND APPARATUS FOR INTEGRATED CIRCUIT, AND ELECTRONIC DEVICE**

(30) Priority: 11.06.2024 CN 202410748667
(71) Applicant: Horizon Journey (Hangzhou) Technology Co., Ltd., Hangzhou, Zhejiang 310000 (CN)
(72) Inventor: SHI, Zhipeng, Hangzhou, 310000 (CN)
(74) Representative: Dehns Germany Partnerschaft mbB

(57) **Abstract**

Disclosed are a security resource access method and apparatus for an integrated circuit and an electronic device, relating to the technical field of integrated circuits. The method includes: determining, on the integrated circuit, a processor core corresponding to each of a plurality of operating system domains; running a first preset-state operating system or a second preset-state operating system in the operating system domain by the processor core corresponding to the operating system domain; and processing a security resource access request of the second preset-state operating system in the operating system domain based on the first preset-state operating system in the operating system domain. According to technical solutions of this disclosure, it can be ensured that resources between different operating system domains are relatively isolated, and greatly enhancing security of a plurality of operating systems.

## Description

### FIELD OF THE INVENTION

This disclosure relates to the technical field of integrated circuits, and in particular, to a security resource access method and apparatus for an integrated circuit, and an electronic device.

### BACKGROUND OF THE INVENTION

With development of semiconductor technologies, an integrated circuit (a system on chip, SoC) may include a plurality of processor cores. To utilize advantages of the plurality of processor cores, different operating systems (OSs) may be run by different processor cores, so that a plurality of operating systems may run on the integrated circuit.

To improve security of the integrated circuit, a secure world operating system (such as a secure world OS) and a plurality of non-secure world operating systems are usually run on the integrated circuit. When the non-secure world operating system needs to access security resources in the secure world operating system, a security resource access request may be sent to the secure world operating system through a security monitoring program (such as a secure monitor) deployed on the integrated circuit, and an access result returned by the secure world operating system may be fed back to the non-secure world operating system by the security monitoring program.

### SUMMARY OF THE INVENTION

When a plurality of non-secure world operating systems can all access all security resources in a secure world operating system, it is unfavorable for resource isolation; and once the secure world operating system fails, all the non-secure world operating systems cannot request the security resources normally.

To resolve the foregoing technical problems, this disclosure provides a security resource access method and apparatus for an integrated circuit, and an electronic device, which can resolve a problem that all non-secure world operating systems cannot request security resources normally due to a fault of a secure world operating system.

According to a first aspect of this disclosure, a security resource access method for an integrated circuit is provided, including:
determining, on the integrated circuit, a processor core corresponding to each of a plurality of operating system domains; running a first preset-state operating system or a second preset-state operating system in the operating system domain by the processor core corresponding to the operating system domain; and processing a security resource access request of the second preset-state operating system in the operating system domain based on the first preset-state operating system in the operating system domain.

According to a second aspect of this disclosure, a security resource access apparatus for an integrated circuit is provided, including: a determining module, configured to determine, on the integrated circuit, a processor core corresponding to each of a plurality of operating system domains; a running module, configured to run a first preset-state operating system or a second preset-state operating system in the operating system domain by the processor core corresponding to the operating system domain; and a processing module, configured to process a security resource access request of the second preset-state operating system in the operating system domain based on the first preset-state operating system in the operating system domain.

According to a third aspect of this disclosure, a computer readable storage medium is provided. The storage medium stores a computer program, and the computer program is used for implementing the security resource access method for an integrated circuit according to the first aspect.

According to a fourth aspect of this disclosure, an electronic device is provided. The electronic device includes: a processor; and a memory configured to store processor-executable instructions, where the processor is configured to read the executable instructions from the memory, and execute the instructions to implement the security resource access method for an integrated circuit according to the first aspect.

According to a fifth aspect of this disclosure, a computer program product is provided. When instructions in the computer program product are executed by a processor, the security resource access method for an integrated circuit according to the first aspect is implemented.

According to the security resource access method for an integrated circuit that is provided in this disclosure, each operating system domain is run on the processor core corresponding to each operating system domain, and the first preset-state operating system in each operating system domain can only process the security resource access request of the second preset-state operating system in that operating system domain. Therefore, resources between different operating system domains can be isolated, and when the first preset-state operating system in any operating system domain fails, a behavior of accessing security resources in other operating system domains would not be affected, thereby greatly enhancing security of a plurality of operating systems.

### BRIEF DESCRIPTION OF THE DRAWINGS

FIG. 1 is an architectural diagram of software of a system on chip according to an exemplary embodiment of this disclosure;
FIG. 2A is an architectural diagram of an integrated circuit according to an exemplary embodiment of this disclosure;
FIG. 2B is an architectural diagram of an integrated circuit according to another exemplary embodiment of this disclosure;
FIG. 3 is an architectural diagram of an integrated circuit according to still another exemplary embodiment of this disclosure;
FIG. 4 is a schematic flowchart of a security resource access method for an integrated circuit according to an exemplary embodiment of this disclosure;
FIG. 5 is a schematic flowchart of a security resource access method for an integrated circuit according to another exemplary embodiment of this disclosure;
FIG. 6 is a schematic flowchart of a security resource access method for an integrated circuit according to still another exemplary embodiment of this disclosure;
FIG. 7 is a schematic flowchart of a security resource access method for an integrated circuit according to yet another exemplary embodiment of this disclosure;
FIG. 8 is a schematic flowchart of a security resource access method for an integrated circuit according to still yet another exemplary embodiment of this disclosure;
FIG. 9 is a schematic flowchart of a security resource access method for an integrated circuit according to a further exemplary embodiment of this disclosure;
FIG. 10 is a schematic flowchart of a security resource access method for an integrated circuit according to a still further exemplary embodiment of this disclosure;
FIG. 11 is a schematic diagram of a structure of a security resource access apparatus for an integrated circuit according to an exemplary embodiment of this disclosure;
FIG. 12 is a schematic diagram of a structure of a security resource access apparatus for an integrated circuit according to another exemplary embodiment of this disclosure;
FIG. 13 is a schematic diagram of a structure of a security resource access apparatus for an integrated circuit according to still another exemplary embodiment of this disclosure;
FIG. 14 is a schematic diagram of a structure of a security resource access apparatus for an integrated circuit according to yet another exemplary embodiment of this disclosure; and
FIG. 15 is a schematic diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Application overview

With increasingly powerful functions of chips, a plurality of operating systems may be run on an integrated circuit (such as a system on chip (SoC)). The plurality of operating systems may be run on different processor cores of the SoC. To improve security of the SoC, hardware and software resources of the SoC may be classified into a secure world and a non-secure world. Security related operations (such as fingerprint recognition, password processing, data encryption and decryption, and security authentication) may be performed in the secure world, while other non-security related operations may be performed in the non-secure world. Switching between the secure world and the non-secure world may be achieved through a security monitoring program (such as a secure monitor).

Typically, a plurality of operating systems may be run on the SoC, including a secure world operating system (secure world OS) and a non-secure world operating system (normal world OS). The secure world operating system is run in the secure world, while the non-secure world operating system is run in the non-secure world. When the non-secure world operating system needs to access security resources in the secure world, a security resource access request may be sent to the secure world operating system through a security monitoring program (such as a secure monitor) deployed on the SoC, and an access result returned by the secure world operating system may be fed back to the non-secure world operating system by the security monitoring program. The non-secure world may also be referred to as a normal world, and the non-secure world operating system also be referred to as a normal operating system.

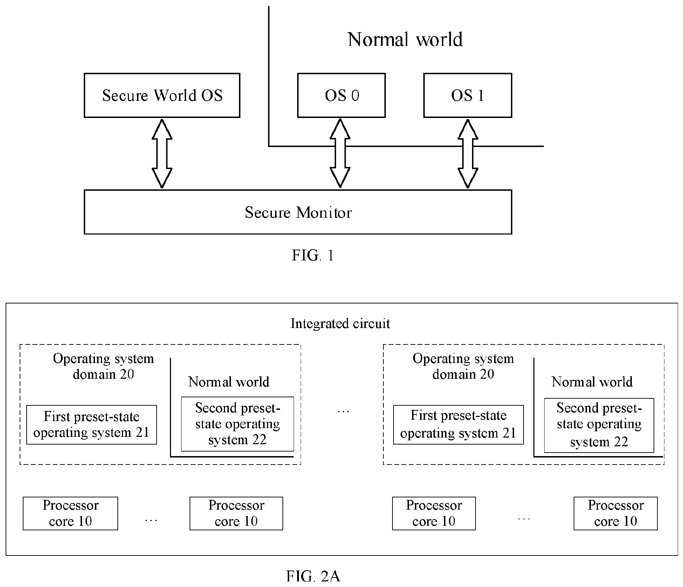

FIG. 1 is an architectural diagram of software of a system on chip according to an exemplary embodiment of this disclosure. As shown in FIG. 1, two non-secure world (normal world) operating systems, that is, an OS 0 and an OS 1, one secure world operating system secure world OS, and one security monitoring program secure monitor are run on the system on chip. When the OS 0 or the OS 1 needs to request the resources from the secure world, a security resource access request needs to be sent to the secure world OS through the secure monitor, which switches the non-secure world to the secure world, and then switches the secure world to the non-secure world after the resources in the secure world are accessed.

However, when the foregoing architecture is used, both the OS 0 and the OS 1 in FIG. 1 can access all security resources in the secure world OS, being unfavorable for resource isolation. Moreover, once the secure world OS fails, all non-secure world operating systems (such as the OS 0 and the OS 1) cannot request the security resources normally.

To resolve the foregoing technical problem, embodiments of this disclosure provide a security resource access method for an integrated circuit. According to this method, the secure world operating system or the non-secure world operating system in each operating system domain is run on the processor core corresponding to that operating system domain, and the secure world operating system in each operating system domain can only process a security resource access request of the normal world operating system in that operating system domain. Therefore, it can be ensured that resources between different operating system domains are relatively isolated, and when a secure world operating system in one operating system domain fails, access to security resources in other operating system domains would not be affected, thereby enhancing system security.

### Exemplary system

An embodiment of this disclosure provides an integrated circuit. As shown in FIG. 2A, the integrated circuit includes a plurality of processor cores 10, and there may be a plurality of operating system domains 20 running on the integrated circuit. Each of the plurality of operating system domains 20 includes a first preset-state operating system 21 and a second preset-state operating system 22, and the plurality of operating system domains 20 may be run on different processor cores.

**In** some embodiments, the first preset-state operating system 21 includes a secure world operating system, the second preset-state operating system 22 includes a non-secure world (normal world) operating system, and each operating system domain 20 may include one secure world operating system and at least one non-secure world operating system. When the operating system domain includes a plurality of non-secure world operating systems, each non-secure world operating system in this operating system domain may access security resources in the secure world operating system in this operating system domain. In other words, the secure world operating system in the operating system domain may process a security resource access request of each non-secure world operating system in the operating system domain. A quantity of the non-secure world operating systems included in the operating system domain is not limited in the embodiments of this disclosure. In the following embodiments, exemplary description is made by an example in which the operating system domain includes one non-secure world operating system.

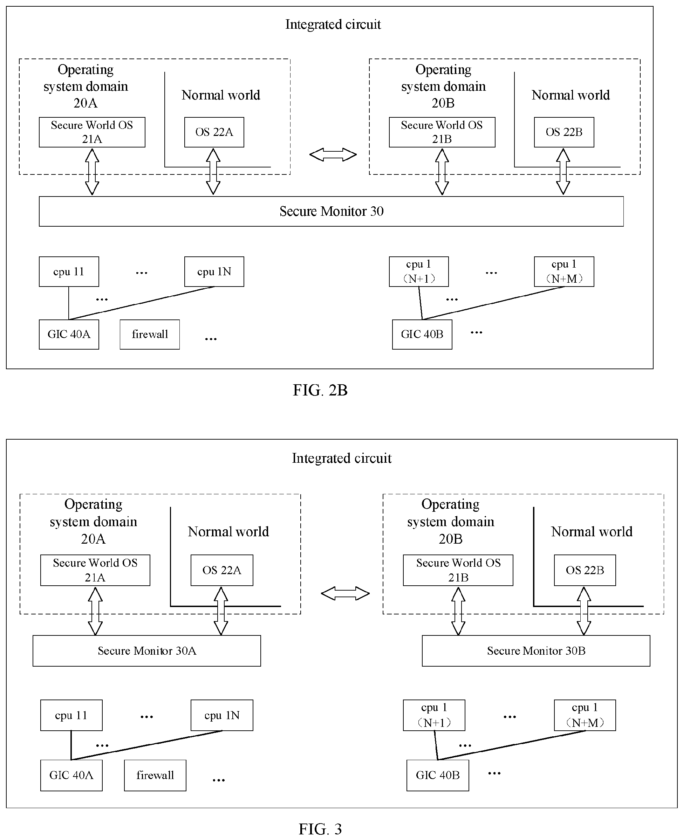

FIG. 2B is an architectural diagram of an integrated circuit according to an exemplary embodiment of this disclosure. As shown in FIG. 2B, the integrated circuit includes a plurality of processor cores, that is, CPU 11 to CPU 1(N+M). Taking that two operating system domains, that is, an operating system domain 20A and an operating system domain 20B, are run on the integrated circuit as an example, processor cores corresponding to the operating system domain 20A are CPU 11 to CPU 1N, and processor cores corresponding to the operating system domain 20B are CPU 1(N+1) to CPU 1(N+M). The operating system domain 20A includes a secure world operating system secure world OS 21A and a non-secure world (normal world) operating system OS 22A. The operating system domain 20B includes a secure world operating system secure world OS 21B and a non-secure world (normal world) operating system OS 22B.

As shown in FIG. 2B, the secure world OS 21A or the OS 22A in the operating system domain 20A may be run through the processor cores CPU 11 to CPU 1N, and the secure world OS 21B or the OS 22B in the operating system domain 20B may be run through the processor cores CPU 1(N+1) to CPU 1(N+M). When the OS 22A in the operating system domain 20A needs to access resources in a secure world, a security resource access request of the OS 22A in the operating system domain 20A may be processed through the secure world OS 21A in the operating system domain 20A. When the OS 22B in the operating system domain 20B needs to access the resources in the secure world, a security resource access request of the OS 22B in the operating system domain 20B may be processed through the secure world OS 21B in the operating system domain 20B.

In some embodiments, when a first preset-state operating system in the operating system domain processes a security resource access request of each second preset-state operating system in the operating system domain, the second preset-state operating system running on the processor core corresponding to the operating system domain may be switched to the first preset-state operating system based on a security monitoring program (such as a secure monitor) corresponding to the operating system domain, and the security resource access request of the second preset-state operating system may be processed based on the first preset-state operating system.

In some examples, the security monitoring program is used to ensure secure communication and interaction between a non-secure world and the secure world, so as to maintain overall system security. A plurality of operating system domains may correspond to a same security monitoring program, or each of the plurality of operating system domains may correspond to one security monitoring program, separately.

As shown in FIG. 2B, taking that the operating system domain 20A and the operating system domain 20B correspond to a same secure monitor 30 as an example, when the OS 22A in the operating system domain 20A needs to access security resources in the secure world, a security resource access request may be sent to the secure world OS 21A in the operating system domain 20A by the secure monitor 30, and an access result returned by the secure world OS 21A may be fed back to the OS 22A by the secure monitor 30. Similarly, the secure world OS 21B in the operating system domain 20B may also process the security resource access request of the OS 22B by the secure monitor 30.

As shown in FIG. 3, that the operating system domain 20A and the operating system domain 20B correspond to different secure monitors is used as an example, where the operating system domain 20A corresponds to a secure monitor 30A and the operating system domain 20B corresponds to a secure monitor 30B. When the OS 22A in the operating system domain 20A needs to access security resources in the secure world, a security resource access request may be sent to the secure world OS 21A in the operating system domain 20A by the secure monitor 30A, and an access result returned by the secure world OS 21A may be fed back to the OS 22A by the secure monitor 30A. Similarly, the secure world OS 21B in the operating system domain 20B may process the security resource access request of the OS 22B by the secure monitor 30B.

It may be understood that when the plurality of operating system domains correspond to a same security monitoring program, if the security monitoring program crashes, all normal world operating systems may be unable to access the security resources. When the plurality of operating system domains correspond to different security monitoring programs, if the security monitoring program corresponding to one operating system domain crashes, access to security resources in other operating system domains would not be affected. Therefore, system security can be further enhanced.

In some embodiments, as shown in FIG. 2B and FIG. 3, the integrated circuit further includes hardware modules such as an interrupt controller (generic interrupt controller, GIC) and a firewall. During an initialization phase, a connection relationship between the GIC and the processor core is flexibly configured, so that the secure world operating system or the non-secure world operating system in each operating system domain may be run on the processor core corresponding to that operating system domain. Through the firewall, different memory spaces may also be configured for the various operating system domains, so that the operating system in each operating system domain is enabled to only access a specific memory space, thereby achieving memory isolation between different operating system domains.

### Exemplary method

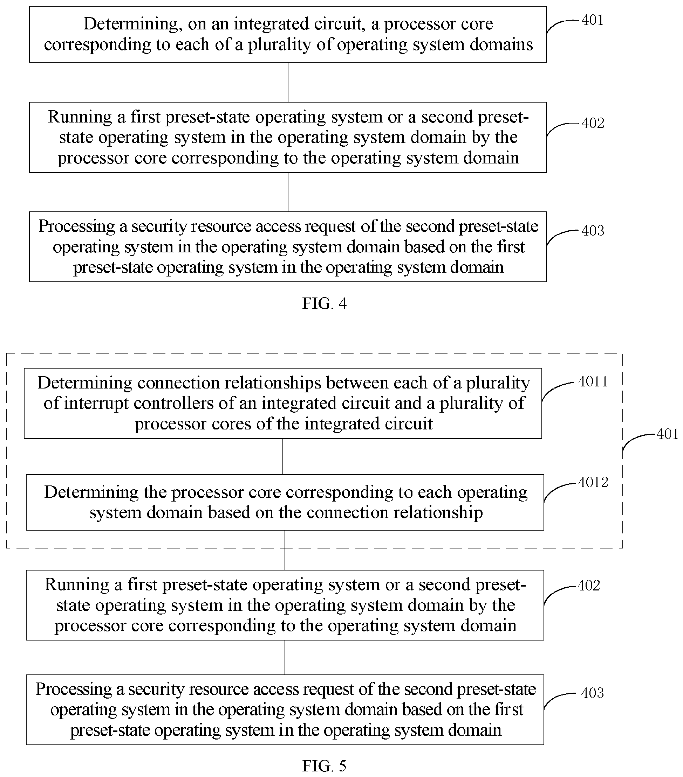

FIG. 4 is a schematic flowchart of a security resource access method for an integrated circuit according to an exemplary embodiment of this disclosure. This embodiment may be applied to an electronic device. As shown in FIG. 4, the method includes the following steps 401 to 403.

Step 401: Determining, on an integrated circuit, a processor core corresponding to each of a plurality of operating system domains.

For example, the integrated circuit may include a plurality of processor cores (such as CPU cores), on which first preset-state operating systems or second preset-state operating systems in the plurality of operating system domains may run. A quantity of the processor cores included on the integrated circuit and a quantity of the operating system domains that may be run on the integrated circuit are not limited in this embodiment of this disclosure.

In some examples, each operating system domain includes a first preset-state operating system and at least one second preset-state operating system. The first preset-state operating system may be an operating system running in a secure world, and may also be referred to as a secure world operating system. The second preset-state operating system may be an operating system running in a non-secure world, and may also be referred to as a non-secure world operating system. Each operating system domain may include one or more non-secure world operating systems. A quantity of the non-secure world operating systems included in each operating system domain is not limited in this embodiment of this disclosure.

For example, quantities of non-secure world operating systems included in different operating system domains in the plurality of operating system domains may be same or different. This is not limited in this embodiment of this disclosure. In the following embodiments, exemplary description is made by an example in which the quantities of the non-secure world operating systems included in the plurality of operating system domains are all the same.

As the integrated circuit may include a plurality of processor cores, before running an operating system on the integrated circuit, it is needed to first determine, on the integrated circuit, the corresponding processor core for each operating system domain. The processor core corresponding to each operating system domain is used to run the secure world operating system or the normal world operating system in that operating system domain.

For example, each operating system domain may correspond to one or more processor cores, and quantities of processor cores corresponding to different operating system domains may be same or different. A quantity of the processor cores corresponding to each operating system domain is not limited in this embodiment of this disclosure.

In some embodiments, the processor cores corresponding to different operating system domains may be different. To be specific, the operating systems in different operating system domains may be run on different processor cores, so that when an exception occurs in a processor core running one operating system domain, normal operation of other operating system domains would not be affected. By running operating systems in different operating system domains on different processor cores, hardware resources running in different operating system domains can be isolated, thereby improving system security.

In some examples, the integrated circuit may include a plurality of interrupt controllers respectively corresponding to the plurality of operating system domains. The processor core of the operating system in the operating system domain corresponding to each interrupt controller may be determined based on a connection relationship between each interrupt controller and each processor core on the integrated circuit; and the processor core corresponding to each operating system domain may also be determined based on a software configuration program. A specific manner for determining the processor core corresponding to each operating system domain is not limited in the embodiments of this disclosure.

Step 402: Running a first preset-state operating system or a second preset-state operating system in the operating system domain by the processor core corresponding to the operating system domain.

For example, after the processor core corresponding to each operating system domain is determined, the secure world operating system or the normal world operating system in the operating system domain may be run on the processor core corresponding to the operating system domain.

In some examples, the secure world operating system and the normal world operating system in the operating system domain may be run on the processor core corresponding to the operating system domain in a time-sharing manner. For example, when there is no need to access the security resources, the non-secure world operating system is run on the processor core corresponding to the operating system domain; and when it is needed to access the security resources, the non-secure world operating system may be switched to the secure world operating system to achieve access to the security resources.

Step 403: Processing a security resource access request of the second preset-state operating system in the operating system domain based on the first preset-state operating system in the operating system domain.

For example, when the non-secure world operating system needs to access the security resources, the security resource access request of the non-secure world operating system in the operating system domain may be processed based on the secure world operating system in the operating system domain.

In some embodiments, when there are a plurality of operating system domains running on the integrated circuit, the first preset-state operating system in one operating system domain can only process the security resource access request of the second preset-state operating system in that operating system domain, but cannot process security resource access requests of second preset-state operating systems in other operating system domains, thereby ensuring that resources between the plurality of operating system domains are isolated from each other. In this way, when the first preset-state operating system in any operating system domain fails, only a behavior of accessing security resources in that operating system domain may be affected, while a behavior of accessing security resources in other operating system domains would not be affected. Therefore, security of the plurality of operating systems can be greatly enhanced.

For example, as shown in FIG. 2B, taking that the operating system domain 20A corresponds to processor cores CPU 11 to CPU 1N and the operating system domain 20B corresponds to processor core CPU 1(N+1) to CPU 1(N+M) as an example, the secure world OS 21A in the operating system domain 20A can only process the security resource access request of the OS 22A in the operating system domain 20A, but cannot process the security resource access request of the OS 22B in the operating system domain 20B. In this way, it can ensure that resources of the operating system domain 20A and the operating system domain 20B are relatively isolated. Therefore, once the secure world OS 21A in the operating system domain 20A fails, only access to the security resources of the OS 22A in the operating system domain 20A are affected, while access to the security resources of the OS 22B in the operating system domain 20B would not be affected. In this case, the security resource access request of the OS 22B in the operating system domain 20B may still be processed through the secure world OS 21B in the operating system domain 20B.

According to the security resource access method provided in the embodiments of this disclosure, by determining, on the integrated circuit, the corresponding processor core for each operating system domain, it can be ensured that the hardware resources corresponding to different operating system domains are isolated from each other; and by processing the security resource access request of the second preset-state operating system in each operating system domain through the first preset-state operating system in that operating system domain, it can be ensured that the resources between different operating system domains are relatively isolated. In this case, when the first preset-state operating system in any operating system domain fails, the behavior of accessing the security resources in other operating system domains would not be affected, which can greatly enhance the security of the plurality of operating systems.

In some embodiments, as shown in FIG. 5, on the basis of the embodiment shown in FIG. 4, step 401 may include steps 4011 and 4012.

Step 4011: Determining connection relationships between each of a plurality of interrupt controllers of the integrated circuit and a plurality of processor cores of the integrated circuit.

For example, the integrated circuit may include a plurality of interrupt controllers. A quantity of the interrupt controllers included in the integrated circuit is not limited in the embodiments of this disclosure. In some examples, the quantity of the interrupt controllers included in the integrated circuit is same as that of the operating system domains that may be run on the integrated circuit.

Each interrupt controller on the integrated circuit may be connected to at least one processor core, and the processor cores connected to different interrupt controllers may be different. To be specific, one processor core may be connected to one interrupt controller.

For example, as shown in FIG. 2B, the integrated circuit includes two interrupt controllers, which respectively are a GIC 40A and a GIC 40B, wherein the GIC 40A is the interrupt controller corresponding to the operating system domain 20A, and the GIC 40B is the interrupt controller corresponding to the operating system domain 20B. It may be determined that a connection relationship of the GIC 40A is that the GIC 40A is connected to the CPU 11 to the CPU 1N, and a connection relationship of the GIC 40B is that the GIC 40B is connected to the CPU 1(N+1) to the CPU 1(N+M).

In some examples, the integrated circuit may also include at least one selector. Each selector is disposed between the processor core and each interrupt controller, and may be used to select which processor cores on the integrated circuit to be connected to the interrupt controller corresponding to each operating system domain.

In some embodiments, the connection relationship between each interrupt controller and the processor core may be configured through software or hardware. For example, the connection relationship between the interrupt controller and the processor core may be configured during a process of starting the security monitoring program. After the connection relationship between the interrupt controller and the processor core is configured, the processor core corresponding to each operating system domain may be determined based on this connection relationship.

Step 4012: Determining the processor core corresponding to each operating system domain based on the connection relationship.

The processor core corresponding to the operating system domain is connected to the corresponding interrupt controller.

For example, since one interrupt controller corresponds to one operating system domain, after a set of processor cores connected to the interrupt controller are determined based on the connection relationship between the interrupt controller and the processor core, a set of processor cores connected to the interrupt controller may be determined as processor cores corresponding to one operating system domain. In other words, a set of processor cores connected to the interrupt controller corresponding to the operating system domain are used to run the secure world operating system or the normal world operating system in that operating system domain.

For example, as shown in FIG. 2B, the integrated circuit includes two interrupt controllers, which respectively are a GIC 40A and a GIC 40B, wherein the GIC 40A may be connected to the CPU 11 to the CPU 1N through the selector, while the GIC 40B may be connected to the CPU 1(N+1) to the CPU 1(N+M) through the selector. Since the GIC 40A and the GIC 40B respectively correspond to the operating system domain 20A and the operating system domain 20B, after it is determined that the set of processor cores connected to the GIC 40A are the CPU 11 to the CPU 1N, the processor cores CPU 11 to CPU 1N may be determined as the processor cores corresponding to the operating system domain 20A, so that the secure world OS 21A or the OS 22A in the operating system domain 20A may be run on the CPU 11 to the CPU 1N. After it is determined that the set of processor cores connected to the GIC 40B are the CPU 1(N+1) to the CPU 1(N+M), the CPU 1(N+1) to the CPU 1(N+M) may be determined as the processor cores corresponding to the operating system domain 20B, so that the secure world OS 21B or the OS 22B in the operating system domain 20B may be run on the CPU 1(N+1) to the CPU 1(N+M).

According to the security resource access method provided in the embodiments of this disclosure, the processor core corresponding to each operating system domain is determined based on the connection relationship between the interrupt controller and the processor core, so that the first preset-state operating system and the second preset-state operating system in each operating system domain may be run on the processor core corresponding to each operating system domain. Moreover, due to different processor cores connected to different interrupt controllers, operating systems in different operating system domains may be run on different processor cores, so that it can be ensured that the hardware resources corresponding to different operating system domains are isolated from each other, thereby further improving the system security.

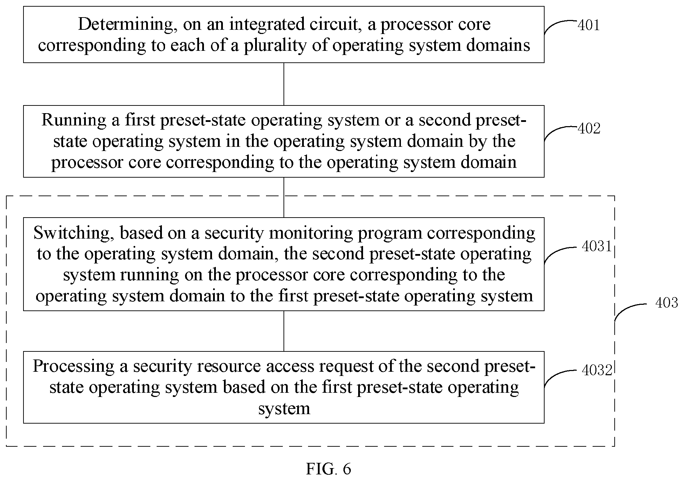

**In** some embodiments, as shown in FIG. 6, on the basis of the embodiment shown in FIG. 4, step 403 may include steps 4031 and 4032.

Step 4031: Switching, based on a security monitoring program corresponding to the operating system domain, the second preset-state operating system running on the processor core corresponding to the operating system domain to the first preset-state operating system.

For example, when the normal world operating system needs to access the security resources, a security resource access request may be sent to the corresponding security monitoring program (secure monitor). After receiving the security resource access request, the secure monitor may verify legitimacy of the request. After the verification is passed, the secure monitor may switch the non-secure world to the secure world, in which the secure world operating system may process the security resource access request.

In some embodiments, the plurality of operating system domains running on the integrated circuit may correspond to a same security monitoring program or to different security monitoring programs. When the plurality of operating system domains correspond to different security monitoring programs, each of the plurality of operating system domains may correspond to one security monitoring program, separately.

When the plurality of operating system domains correspond to a same security monitoring program, the security monitoring program may be used to switch the second preset-state operating system running on the processor core corresponding to each operating system domain to the first preset-state operating system.

For example, as shown in FIG. 2B, the operating system domain 20A and the operating system domain 20B correspond to a same secure monitor 30. The OS 22A in the operating system domain 20A running on the CPU 11 to the CPU 1N may be switched to the secure world OS 21A by the secure monitor 30; and the OS 22B in the operating system domain 20B running on the CPU 1(N+1) to the CPU 1(N+M) may be switched to the secure world OS 21B by the secure monitor 30.

When each of the plurality of operating system domains corresponds to one security monitoring program separately, the security monitoring program corresponding to each operating system domain may be used to switch the second preset-state operating system running on the processor core corresponding to that operating system domain to the first preset-state operating system.

For example, as shown in FIG. 3, the operating system domain 20A corresponds to the secure monitor 30A while the operating system domain 20B corresponds to the secure monitor 30B. The OS 22A in the operating system domain 20A running on the CPU 11 to the CPU 1N may be switched to the secure world OS 21A by the secure monitor 30A; and the OS 22B in the operating system domain 20B running on the CPU 1(N+1) to the CPU 1(N+M) may be switched to the secure world OS 21B by the secure monitor 30B.

It may be understood that compared to that the plurality of operating system domains correspond to a same security monitoring program, when the plurality of operating system domains correspond to different security monitoring programs separately, if the security monitoring program corresponding to one operating system domain crashes, access to security resources in other operating system domains would not be affected. Therefore, system security can be further enhanced.

Step 4032: Processing the security resource access request of the second preset-state operating system based on the first preset-state operating system.

For example, after the non-secure world is switched to the secure world by the secure monitor, in the secure world, the first preset-state operating system (such as the secure world operating system) may process the security resource access request (such as performing encryption, decryption, and security authentication), and an access result may be fed back to the second preset-state operating system (such as the non-secure world operating system) by the secure monitor. When the access result is transmitted to the second preset-state operating system, the secure world may be switched back to the non-secure world by the secure monitor, and other non-secure operations may be performed by the second preset-state operating system in the non-secure world.

According to the security resource access method provided in the embodiments of this disclosure, the second preset-state operating system running on the processor core corresponding to the operating system domain may be switched to the first preset-state operating system through the security monitoring program corresponding to the operating system domain, so as to process the security resource access request. Since different operating system domains may correspond to different security monitoring programs, when the security monitoring program corresponding to one operating system domain crashes, access to security resources in other operating system domains would not be affected, thereby further enhancing system security.

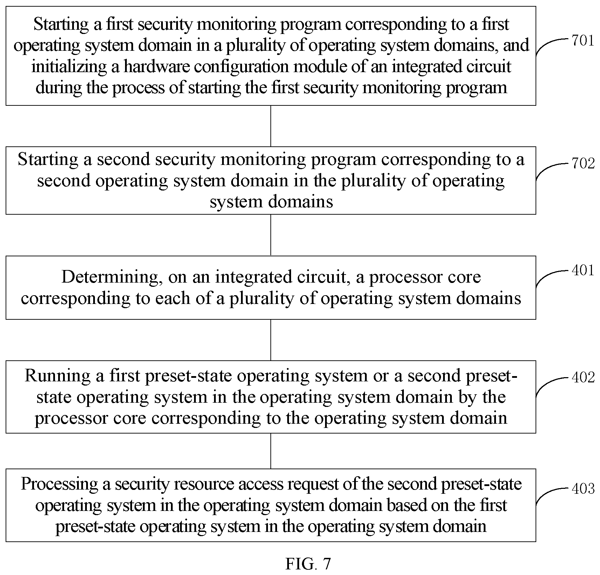

In some embodiments, as shown in FIG. 7, on the basis of the embodiment shown in FIG. 4, the security resource access method for an integrated circuit described above may include steps 701 and 702.

Step 701: Starting a first security monitoring program corresponding to a first operating system domain in the plurality of operating system domains, and initializing a hardware configuration module of the integrated circuit during the process of starting the first security monitoring program.

For example, the plurality of operating system domains may include the first operating system domain and a second operating system domain. Taking that the first operating system domain and the second operating system domain correspond to different security monitoring programs as an example, the first operating system domain may correspond to the first security monitoring program, while the second operating system domain may correspond to a second security monitoring program. The first operating system domain may be any one in the plurality of operating system domains.

In some examples, the plurality of operating system domains running on the integrated circuit may include a primary operating system domain and at least one secondary operating system domain. The first operating system domain may be the primary operating system domain and the second operating system domain may be the secondary operating system domain.

When the integrated circuit is started, the first security monitoring program and the second security monitoring program may be loaded to different locations in a memory. During a process of starting one secure monitor (such as the first security monitoring program), the hardware configuration module of the integrated circuit may be initialized by this secure monitor, and then another secure monitor (such as the second security monitoring program) may be started. It may be understood that when a plurality of secure monitors are started, it is only required to initialize common hardware (such as the hardware configuration module) during a process of starting a first secure monitor, and secure monitors started later are not required to initialize the common hardware.

For example, the hardware configuration module may include modules such as a hardware firewall and an interrupt controller.

Step 702: Starting a second security monitoring program corresponding to a second operating system domain in the plurality of operating system domains.

For example, when starting the secure monitor corresponding to the second operating system domain in the plurality of operating system domains, there is no need to initialize the hardware configuration module of the integrated circuit again, so that repeated initialization of the hardware resources by the secure monitors started later can be avoided, thereby improving startup efficiency.

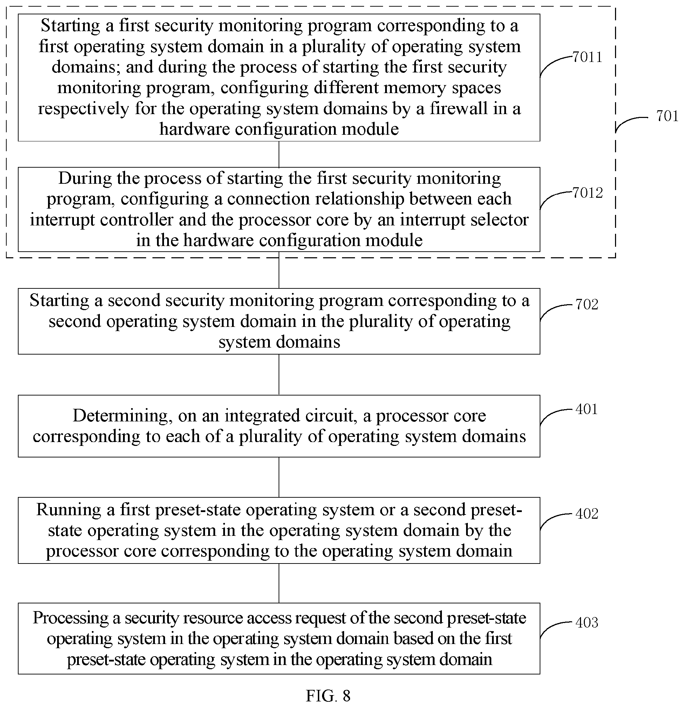

In some embodiments, as shown in FIG. 8, on the basis of the embodiment shown in FIG. 7, step 701 may include steps 7011 and 7012.

Step 7011: Starting the first security monitoring program corresponding to the first operating system domain in the plurality of operating system domains; and during the process of starting the first security monitoring program, configuring different memory spaces respectively for the operating system domains by a firewall in the hardware configuration module.

For example, during the process of starting the first security monitoring program, the memory space accessible to each of the plurality of operating system domains may be configured. In some examples, the memory spaces accessible to different operating system domains may be different. For example, the memory spaces accessible to different operating system domains may partially overlap or do not overlap at all. When the memory spaces accessible to different operating system domains do not overlap at all, memory isolation between the different operating system domains may be achieved, thereby further enhancing the system security.

In some embodiments, after the memory space accessible to each operating system domain is configured through the hardware firewall, configuration information of the firewall may be locked to ensure that the configured memory space accessible to each operating system domain cannot be modified.

Step 7012: During the process of starting the first security monitoring program, configuring a connection relationship between each interrupt controller and the processor core by an interrupt selector in the hardware configuration module.

For example, during the process of starting the first security monitoring program, the connection relationship between each interrupt controller and the processor core may be configured. For example, the connection relationship between each interrupt controller and the processor core may be configured by the interrupt selector in the integrated circuit.

In some examples, when the connection relationship between each interrupt controller and the processor core is configured by the interrupt selector, one processor core may be connected to only one interrupt controller, so as to ensure that the operating system domains corresponding to the various interrupt controllers may be run on different processor cores, thereby achieving hardware resource isolation between the plurality of operating system domains.

According to the security resource access method provided in the embodiments of this disclosure, memory isolation between different operating system domains can be achieved by configuring different memory spaces respectively for the operating system domains during the process of starting the first security monitoring program; and the hardware resource isolation between the plurality of operating system domains can be achieved by configuring the connection relationship between each interrupt controller and the processor core, thereby further enhancing the system security.

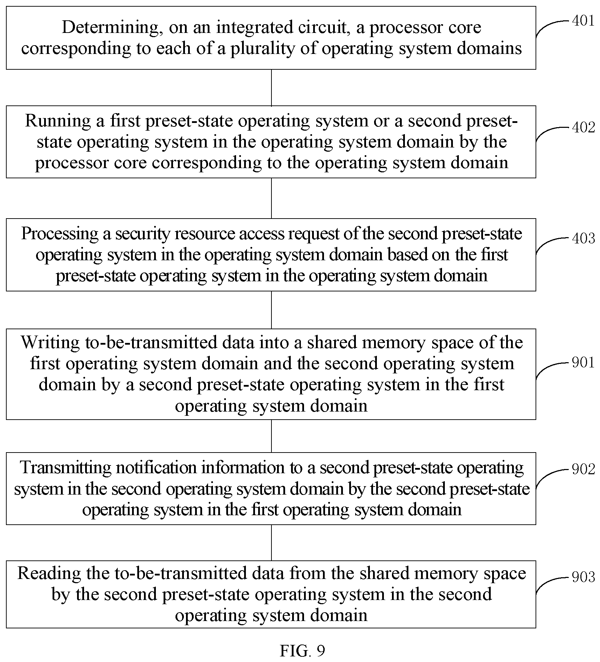

In some embodiments, as shown in FIG. 9, on the basis of the embodiment shown in FIG. 4, the security resource access method for an integrated circuit described above may include steps 901 to 903.

Step 901: Writing to-be-transmitted data into a shared memory space of the first operating system domain and the second operating system domain by a second preset-state operating system in the first operating system domain.

For example, the memory space that is accessible to the first operating system domain and is configured through the firewall is referred to as a first memory space, and the memory space accessible to the second operating system domain is referred to as a second memory space. Moreover, taking that the second memory space is a part of the first memory space as an example, an intersection memory space between the first memory space and the second memory space may be referred to as a shared memory space, which may be accessed by both the first operating system domain and the second operating system domain.

When implementing inter-core communication between different operating system domains, the to-be-transmitted data may be written into the shared memory space by the second preset-state operating system in the first operating system domain. For example, the first operating system domain may be the primary operating system domain, and the second preset-state operating system in the first operating system domain may be a primary OS.

Step 902: Transmitting notification information to a second preset-state operating system in the second operating system domain by the second preset-state operating system in the first operating system domain.

The notification information indicates that data that can be read by the second preset-state operating system in the second operating system domain is stored in the shared memory space.

For example, the first operating system domain may communicate with the second operating system domain through a hardware mailbox. After the to-be-transmitted data is written into the shared memory space by the second preset-state operating system in the first operating system domain, the notification information may be generated and may be transmitted to the second preset-state operating system in the second operating system domain through the mailbox, to inform the second preset-state operating system in the second operating system domain that readable data is stored in the shared memory space.

For example, as shown in FIG. 3, the OS 22A in the operating system domain 20A may write the to-be-transmitted data into the shared memory space accessible to both the operating system domain 20A and the operating system domain 20B, and generate a notification message. Subsequently, the OS 22A sends the notification message to the OS 22B in the operating system domain 20B through the mailbox, to inform the OS 22B that readable data is stored in the shared memory space. In other words, communication between the second preset-state operating system in the first operating system domain and the second preset-state operating system in the second operating system domain may be achieved based on the mailbox.

In some examples, the second preset-state operating system in the first operating system domain may access actual physical devices, while the second preset-state operating system in the second operating system domain cannot access the actual physical devices and can only access simulated devices.

Step 903: In response to the notification information, reading the to-be-transmitted data from the shared memory space by the second preset-state operating system in the second operating system domain.

For example, after receiving the notification information, the second preset-state operating system in the second operating system domain may read the to-be-transmitted data from the shared memory based on the notification information.

According to the security resource access method provided in the embodiments of this disclosure, the to-be-transmitted data is written into the shared memory through the second preset-state operating system in the first operating system domain, and the notification information indicating that the readable data is stored in the shared memory is sent to the second preset-state operating system in the second operating system domain through the mailbox, so that the second preset-state operating system in the second operating system domain may read data from the shared memory. In this way, inter-core communication between different operating system domains can be achieved, thereby resolving a problem that a plurality of OSs cannot perform inter-core communication with each other in a scenario without a hypervisor.

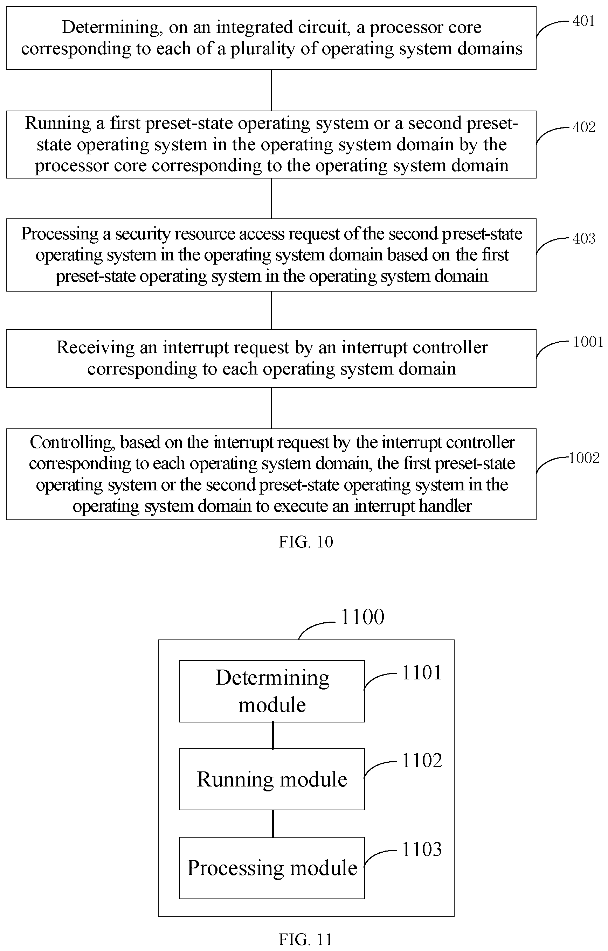

In some embodiments, as shown in FIG. 10, on the basis of the embodiment shown in FIG. 4, the security resource access method for an integrated circuit described above may include steps 1001 and 1002.

Step 1001: Receiving an interrupt request by the interrupt controller corresponding to each operating system domain.

For example, one operating system domain corresponds to one interrupt controller. Therefore, the interrupt request may be received by the interrupt controllers corresponding to the various operating system domains. Moreover, the operating system in each operating system domain can only process the interrupt request received by the interrupt controller corresponding to that operating system domain, but cannot process interrupt requests received by the interrupt controllers corresponding to other operating system domains. In this case, it can be ensured that interrupt processing between different operating system domains does not interfere with each other, thereby further improving the system security.

Step 1002: Controlling, based on the interrupt request by the interrupt controller corresponding to each operating system domain, the first preset-state operating system or the second preset-state operating system in the operating system domain to execute an interrupt handler.

For example, after the interrupt request is received by the interrupt controller, the interrupt can only be processed by the secure world operating system or the non-secure world operating system in the operating system domain corresponding to the interrupt controller.

For example, as shown in FIG. 3, after an interrupt request a is received by a GIC 40A corresponding to the operating system domain 20A, the interrupt request a received by the GIC 40A is processed by the OS 22A or the secure world OS 21A in the operating system domain 20A, while the OS 22B or the secure world OS 21B in the operating system domain 20B does not perceive the interrupt request a. In other words, the secure world operating system or the normal world operating system in each operating system domain can only process the interrupt request received by the interrupt controller corresponding to that operating system domain, and does not perceive the interrupt requests received by the interrupt controllers corresponding to other operating system domains.

In some examples, if the interrupt request received by the interrupt controller is an interrupt request for the secure world, the interrupt request may be processed by the secure world operating system in the operating system domain corresponding to the interrupt controller. If the interrupt request received by the interrupt controller is an interrupt request for the non-secure world, the interrupt request may be processed by the non-secure world operating system in the operating system domain corresponding to the interrupt controller.

According to the security resource access method provided in the embodiments of this disclosure, the interrupt request received by each interrupt controller is processed by the secure world operating system or the non-secure world operating system in the operating system domain corresponding to that interrupt controller, which can ensure that interrupt processing between different operating system domains does not interfere with each other, thereby further improving the system security.

### Exemplary apparatus

FIG. 11 shows a security resource access apparatus for an integrated circuit according to an embodiment of this disclosure. As shown in FIG. 11, a security resource access apparatus 1100 includes a determining module 1101, a running module 1102, and a processing module 1103.

The determining module 1101 is configured to determine, on the integrated circuit, a processor core corresponding to each of a plurality of operating system domains.

The running module 1102 is configured to run a first preset-state operating system or a second preset-state operating system in the operating system domain by the processor core corresponding to the operating system domain.

The processing module 1103 is configured to process a security resource access request of the second preset-state operating system in the operating system domain based on the first preset-state operating system in the operating system domain.

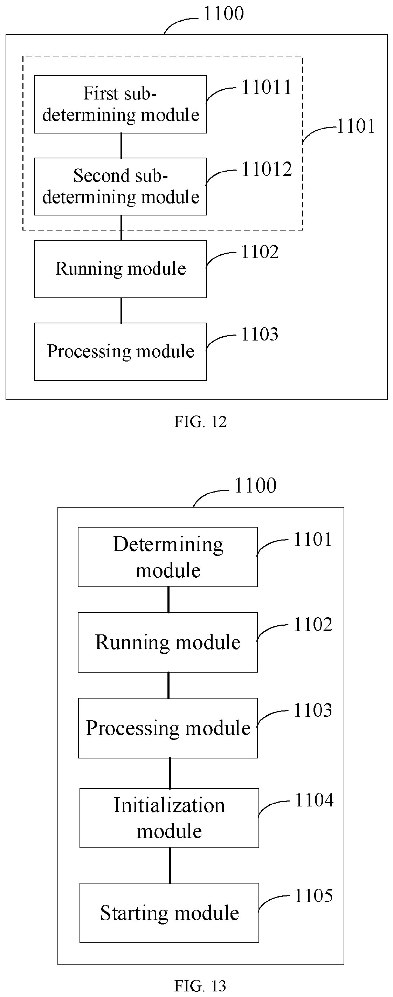

In some embodiments, as shown in FIG. 12, the determining module 1101 includes a first sub-determining unit 11011 and a second sub-determining unit 11012.

The first sub-determining unit 11011 is configured to determine connection relationships between each of a plurality of interrupt controllers of the integrated circuit and a plurality of processor cores of the integrated circuit.

The second sub-determining unit 11012 is configured to determine the processor core corresponding to each operating system domain based on the connection relationship, where the processor core corresponding to the operating system domain is connected to the corresponding interrupt controller.

In some embodiments, the processing module 1103 is configured to switch, based on a security monitoring program corresponding to the operating system domain, the second preset-state operating system running on the processor core corresponding to the operating system domain to the first preset-state operating system; and process the security resource access request of the second preset-state operating system based on the first preset-state operating system.

In some examples, the plurality of operating system domains correspond to a same security monitoring program, or each of the plurality of operating system domains corresponds to one security monitoring program, separately.

In some embodiments, as shown in FIG. 13, the security resource access apparatus 1100 further includes an initialization module 1104 and a starting module 1105.

The starting module 1105 is configured to start a first security monitoring program corresponding to a first operating system domain in the plurality of operating system domains. The initialization module 1104 is configured to initialize a hardware configuration module of the integrated circuit during the process of starting the first security monitoring program by the starting module 1105.

The starting module 1105 is further configured to start a second security monitoring program corresponding to a second operating system domain in the plurality of operating system domains.

In some embodiments, the starting module 1105 is configured to configure, during the process of starting the first security monitoring program, different memory spaces respectively for the operating system domains by a firewall in the hardware configuration module; and during the process of starting the first security monitoring program, configure a connection relationship between each interrupt controller and the processor core by an interrupt selector in the hardware configuration module.

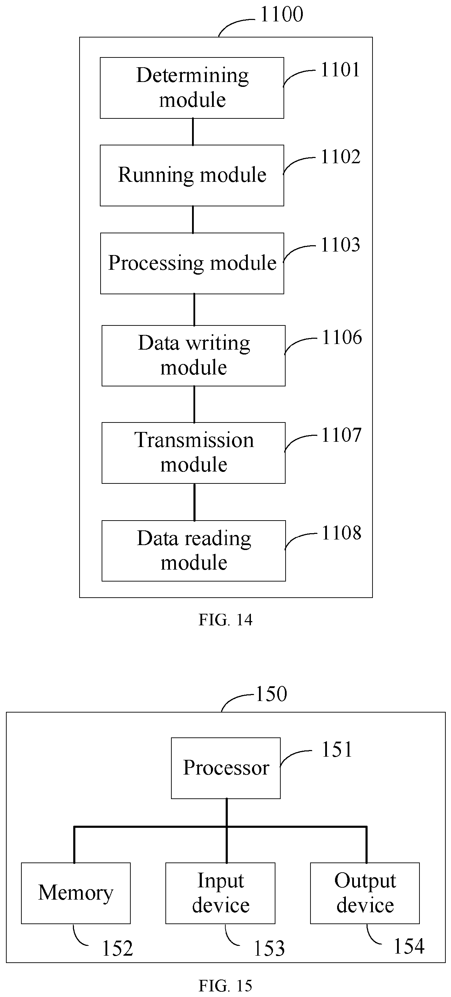

In some embodiments, as shown in FIG. 14, the security resource access apparatus 1100 further includes a data writing module 1106, a transmission module 1107, and a data reading module 1108.

The data writing module 1106 is configured to write to-be-transmitted data into a shared memory space of the first operating system domain and the second operating system domain by a second preset-state operating system in the first operating system domain.

The transmission module 1107 is configured to transmit notification information to a second preset-state operating system in the second operating system domain by the second preset-state operating system in the first operating system domain, where the notification information indicates that data that can be read by the second preset-state operating system in the second operating system domain is stored in the shared memory space.

The data reading module 1108 is configured to read, in response to the notification information, the to-be-transmitted data from the shared memory space by the second preset-state operating system in the second operating system domain.

In some optional embodiments, as shown in FIG. 14, the security resource access apparatus 1100 further includes an interrupt processing module 1109.

The interrupt processing module 1109 is configured to receive an interrupt request by the interrupt controller corresponding to each operating system domain; and control, based on the interrupt request by the interrupt controller corresponding to each operating system domain, the first preset-state operating system or the second preset-state operating system in the operating system domain to execute an interrupt handler.

For beneficial technical effects corresponding to the exemplary embodiments of the security resource access apparatus 1100 described above, reference may be made to the corresponding beneficial technical effects in the section of exemplary method described above, and details are not described herein again.

### Exemplary electronic device

FIG. 15 is a diagram of a structure of an electronic device 150 according to an embodiment of this disclosure. The electronic device includes at least one processor 151 and a memory 152.

The processor 151 may be a central processing unit (CPU) or another form of processing unit having a data processing capability and/or an instruction execution capability, and may control other components in the electronic device 150 to implement desired functions.

The memory 152 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 151 may execute the one or more program instructions to implement the method for a reinforcement learning model according to various embodiments of this disclosure that are described above and/or other desired functions.

In an example, the electronic device 150 may further include an input device 153 and an output device 154. These components are connected to each other through a bus system and/or another form of connection mechanism (not shown).

The input device 153 may further include, for example, a keyboard and a mouse.

The output device 154 may output various information to the outside, and may include, for example, a display, a speaker, a printer, a communication network, and a remote output device connected to the communication network.

Certainly, for simplicity, FIG. 15 shows only some of components in the electronic device 150 that are related to this disclosure, and components such as a bus and an input/output interface are omitted. In addition, according to specific application situations, the electronic device 150 may further include any other appropriate components.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the security resource access method for an integrated circuit according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the security resource access method for an integrated circuit according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by the foregoing specific details.

A person skilled in the art may make various modifications and variations to this disclosure without departing from the spirit and the scope of this disclosure. In this way, if these modifications and variations of this disclosure fall within the scope of the claims and equivalent technologies of the claims of this disclosure, this disclosure also intends to include these modifications and variations.

## Claims

1. A security resource access method for an integrated circuit, **characterized in that** the security resource access method comprises:
Determining (401), on the integrated circuit, a processor core corresponding to each of a plurality of operating system domains;
running (402) a first preset-state operating system or a second preset-state operating system in the operating system domain by the processor core corresponding to the operating system domain; and
processing (403) a security resource access request of the second preset-state operating system in the operating system domain based on the first preset-state operating system in the operating system domain.

2. The method according to claim 1, wherein the determining (401), on the integrated circuit, a processor core corresponding to each of a plurality of operating system domains comprises:
determining (4011) connection relationships between each of a plurality of interrupt controllers of the integrated circuit and a plurality of processor cores of the integrated circuit; and
determining (4012) the processor core corresponding to each operating system domain based on the connection relationship, wherein the processor core corresponding to the operating system domain is connected to the corresponding interrupt controller.

3. The method according to claim 1, wherein the processing (403) a security resource access request of the second preset-state operating system in the operating system domain based on the first preset-state operating system in the operating system domain comprises:
switching (4031), based on a security monitoring program corresponding to the operating system domain, the second preset-state operating system running on the processor core corresponding to the operating system domain to the first preset-state operating system; and
processing (4032) the security resource access request of the second preset-state operating system based on the first preset-state operating system.

4. The method according to claim 3, wherein the plurality of operating system domains correspond to a same security monitoring program, or each of the plurality of operating system domains corresponds to one security monitoring program, separately.

5. The method according to claim 3, further comprising:
starting (701) a first security monitoring program corresponding to a first operating system domain in the plurality of operating system domains, and initializing a hardware configuration module of the integrated circuit during the process of starting the first security monitoring program; and
starting (702) a second security monitoring program corresponding to a second operating system domain in the plurality of operating system domains.

6. The method according to claim 5, wherein the initializing a hardware configuration module of the integrated circuit during the process of starting the first security monitoring program comprises:
during the process of starting the first security monitoring program, configuring (7011) different memory spaces respectively for the operating system domains by a firewall in the hardware configuration module; and
during the process of starting the first security monitoring program, configuring (7012) a connection relationship between each interrupt controller and the processor core by an interrupt selector in the hardware configuration module.

7. The method according to any one of claims 1 to 6, further comprising:
writing (901) to-be-transmitted data into a shared memory space of the first operating system domain and the second operating system domain by the second preset-state operating system in the first operating system domain;
transmitting (902) notification information to a second preset-state operating system in the second operating system domain by the second preset-state operating system in the first operating system domain, wherein the notification information indicates that data that can be read by the second preset-state operating system in the second operating system domain is stored in the shared memory space; and
in response to the notification information, reading (903) the to-be-transmitted data from the shared memory space by the second preset-state operating system in the second operating system domain.

8. The method according to any one of claims 1 to 6, further comprising:
receiving (1001) an interrupt request by the interrupt controller corresponding to each operating system domain; and
controlling (1002), based on the interrupt request, by the interrupt controller corresponding to each operating system domain, the first preset-state operating system or the second preset-state operating system in the operating system domain to execute an interrupt handler.

9. A security resource access apparatus (1100) for an integrated circuit, **characterized in that** the security resource access apparatus comprises:
a determining module (1101), configured to determine, on the integrated circuit, a processor core corresponding to each of a plurality of operating system domains;
a running module (1102), configured to run a first preset-state operating system or a second preset-state operating system in the operating system domain by the processor core corresponding to the operating system domain; and
a processing module (1103), configured to process a security resource access request of the second preset-state operating system in the operating system domain based on the first preset-state operating system in the operating system domain.

10. The security resource access apparatus (1100) according to claim 9, wherein the determining module (1101) comprises:
a first sub-determining unit (11011), configured to determine connection relationships between each of a plurality of interrupt controllers of the integrated circuit and a plurality of processor cores of the integrated circuit; and
a second sub-determining unit (11012), configured to determine the processor core corresponding to each operating system domain based on the connection relationship, where the processor core corresponding to the operating system domain is connected to the corresponding interrupt controller.

11. The security resource access apparatus (1100) according to claim 9, further comprises:
a starting module (1105), configured to start a first security monitoring program corresponding to a first operating system domain in the plurality of operating system domains; and
an initialization module (1104), configured to initialize a hardware configuration module of the integrated circuit during the process of starting the first security monitoring program by the starting module (1105).

12. The security resource access apparatus (1100) according to claim 11, wherein the starting module (1105) is further configured to start a second security monitoring program corresponding to a second operating system domain in the plurality of operating system domains.

13. The security resource access apparatus (1100) according to claim 9, further comprises:
a data writing module (1106), configured to write to-be-transmitted data into a shared memory space of the first operating system domain and the second operating system domain by a second preset-state operating system in the first operating system domain;
a transmission module (1107), configured to transmit notification information to a second preset-state operating system in the second operating system domain by the second preset-state operating system in the first operating system domain, where the notification information indicates that data that can be read by the second preset-state operating system in the second operating system domain is stored in the shared memory space; and
a data reading module (1108), configured to read, in response to the notification information, the to-be-transmitted data from the shared memory space by the second preset-state operating system in the second operating system domain.

14. A computer readable storage medium, on which a computer program is stored, wherein the computer program, when executed by a processor, causes the processor to implement the security resource access method for an integrated circuit according to any one of claims 1 to 8.

15. An electronic device (150), **characterized in that** the electronic device comprises:
a processor (151); and
a memory (152), configured to store processor-executable instructions, wherein
the processor (151) is configured to read the executable instructions from the memory (152), and execute the instructions to implement the security resource access method for an integrated circuit according to any one of claims 1 to 8.
